# EUROPÄISCHE PATENTSCHRIFT

(11) **EP 2 957 024 B1**
(45) Veröffentlichungstag und Bekanntmachung des Hinweises auf die Patenterteilung: **01.08.2018**
(21) Anmeldenummer: 14700447.7
(22) Anmeldetag: 09.01.2014
(51) Int. Cl.: H02K 17/16, H02K 15/00

(54) **FLIEHKRAFTABSTÜTZUNG EINES KURZSCHLUSSRINGS BEI INDUKTIONSMASCHINEN**
CENTIFUGAL PROTECTION OF A SHORT CIRCUIT RING IN INDUCTION MACHINES
PROTECTION D'UNE BAGUE DE COURT-CIRCUIT CONTRE LES EFFETS DE LA FORCE CENTRIFUGE DANS DES MACHINES À INDUCTION

(30) Priorität: 14.02.2013 DE 102013202403
(43) Veröffentlichungstag der Anmeldung: 23.12.2015
(73) Patentinhaber: Robert Bosch GmbH, 70442 Stuttgart (DE)
(72) Erfinder: KNAPPENBERGER, Uwe, 75417 Muehlacker (DE); KUEHBACHER, Daniel, 70569 Stuttgart (DE)
(86) Internationale Anmeldenummer: PCT/EP2014/050257
(87) Internationale Veröffentlichungsnummer: WO 2014/124762

(56) Entgegenhaltungen:
- EP-A2- 2 149 970
- DE-A1-102005 030 798
- US-A1- 2013 119 820

## Beschreibung

### Stand der Technik

Elektromotoren können in vielen Bereichen von Industrie und Technik eingesetzt werden. Dabei können die Elektromotoren beispielsweise als Induktionsmaschinen, auch als Käfigläufer bezeichnet, ausgeführt sein. Diese können ein Lamellenpaket beispielsweise aus Stahl aufweisen. In dem Lamellenpaket können Nuten vorgesehen sein, in denen ein Käfig aus elektrisch gut leitfähigen Läuferstäben vorgesehen ist. In Stirnbereichen des Lamellenpakets können die Läuferstäbe jeweils durch einen Kurzschlussring aus einem ebenfalls elektrisch gut leitfähigen Material miteinander verbunden sein. Dabei wird bei Betrieb der Induktionsmaschine elektrischer Strom im Kurzschlussring induziert.

Um Stromwärmeverluste im Käfigläufer zu verringern, kann es von Vorteil sein, einen möglichst großen Kurzschlussring vorzusehen. Ferner kann es von Vorteil sein, den Kurzschlussring mit einem Material mit einer möglichst großen elektrischen Leitfähigkeit auszugestalten. Je größer jedoch der Kurzschlussring ausgeführt ist, desto größer kann auch seine Masse sein. Dies kann zu einer erhöhten Belastung bei Drehung des Käfigläufers durch Fliehkräfte führen. Ferner können Materialien mit großer elektrischer Leitfähigkeit eine geringe Festigkeit aufweisen. Durch diese Faktoren kann die Drehzahl und Fliehkraftfestigkeit des Käfigläufers begrenzt sein.

Aus der DE 10 2005 030798 A1 ist ein Käfigläufer für eine Elektromaschine mit gegossenem Kurzschlussring bekannt. Um die Fliehkräfte des Kurzschlussrings aufzunehmen, ist an den Stirnseiten des Blechpakets jeweils ein Formblech vorgesehen, das in axialer Verlängerung des Blechpakets einen Steg darstellt, der die Fliehkräfte aufnimmt.

### Offenbarung der Erfindung

Es kann daher ein Bedarf an einem verbesserten Käfigläufer, sowie einem verbesserten Herstellungsverfahren eines Käfigläufers bestehen, die es insbesondere ermöglichen, die Drehzahlfestigkeit des Käfigläufers bei möglichst minimalen Stromwärmeverlusten zu erhöhen.

Dieser Bedarf kann durch den Gegenstand der vorliegenden Erfindung gemäß den unabhängigen Ansprüchen 1 und 6 gedeckt werden. Vorteilhafte Ausführungsformen der vorliegenden Erfindung sind in den abhängigen Ansprüchen beschrieben.

Im Folgenden werden Merkmale, Einzelheiten und mögliche Vorteile einer Vorrichtung gemäß Ausführungsformen der Erfindung im Detail diskutiert.

Gemäß einem ersten Aspekt der Erfindung wird ein Käfigläufer für eine Elektromaschine mit gegossenem Kurzschlussring vorgestellt. Der Käfigläufer weist einen Stirnbereich und einen gegossenen Kurzschlussring auf. Der Kurzschlussring ist dabei im Stirnbereich angeordnet. Ferner ist im Stirnbereich mindestens ein Befestigungselement vorgesehen, das einen Formschluss zwischen dem Stirnbereich und dem Kurzschlussring herstellt bzw. ermöglicht.

Anders ausgedrückt basiert die Idee der vorliegenden Erfindung darauf, die mechanische Belastbarkeit des Kurzschlussringes dadurch zu erhöhen, dass ein Befestigungselement, wie zum Beispiel eine Lasche oder eine Ausnehmung im Stirnbereich, eine formschlüssige Verbindung zwischen dem Lamellenpaket und dem Kurzschlussring herstellt. Die formschlüssige Verbindung zwischen Befestigungselement und Kurzschlussring wird zusätzlich zu der formschlüssigen Verbindung zwischen Läuferstäben und dem zusammen mit den Läuferstäben gegossenen Kurzschlussring hergestellt.

Somit wird durch das Vorsehen von Befestigungselementen im Stirnbereich des Käfigläufers die Belastbarkeit des Kurzschlussrings gegen Fliehkrafteinwirkungen erhöht und damit die zulässige Drehzahl gesteigert.

Der Käfigläufer bzw. die Elektromaschine können dabei beispielsweise in einem Kraftfahrzeug, wie zum Beispiel einem Pkw oder einem Lkw, eingesetzt werden. Insbesondere kann die Elektromaschine als Asynchronmaschine ausgeführt sein.

Der Käfigläufer kann beispielsweise ein Läuferlamellenpaket aus Eisen- oder aus Stahllamellen aufweisen. In den Lamellen können Nuten vorgesehen sein, in die Läuferstäbe, beispielsweise aus Kupfer oder Aluminium, eingegossen werden. Ein im Stirnbereich des Käfigläufers angeordneter Kurzschlussring kann beispielsweise einstückig mit den Läuferstäben gegossen werden. Im Kurzschlussring wird bei Betrieb der Elektromaschine elektrischer Strom induziert. Der Kurzschlussring kann dabei beispielsweise ebenfalls aus Kupfer oder aus Aluminium bestehen bzw. Kupfer und/oder Aluminium aufweisen. Insbesondere sind die Läuferstäbe auf beiden Stirnseiten des Käfigläufers jeweils durch einen Kurzschlussring miteinander verbunden.

Der Stirnbereich des Käfigläufers bzw. des Läuferlamellenpakets kann einer Endlamelle bzw. mehreren Endlamellen entsprechen. Die Endlamelle kann eine größere Dicke als die übrigen Lamellen des Läuferlamellenpakets aufweisen.

Das Befestigungselement kann beispielsweise als eine Lasche bzw. ein Vorsprung, wie zum Beispiel ein Haken, ausgeführt sein. Ferner kann das Befestigungselement als Ausnehmung im Stirnbareich ausgeführt sein. Insbesondere kann die Ausnehmung zum Beispiel in den Endlamellen oder in der Rotorwelle im Stirnbereich vorgesehen sein. Das Befestigungselement kann dabei vor dem Gießen der Läuferstäbe und des Kurzschlussrings zum Beispiel aus den Endlamellen des Läuferlamellenpakets ausgestanzt und gegebenenfalls in Form gebracht werden. Beim bzw. nach dem Gießen der Läuferstäbe und des Kurzschlussrings entsteht eine form- und gegebenenfalls stoffschlüssige Verbindung zwischen dem Kurzschlussring und dem Stirnbereich. Diese zumindest formschlüssige Verbindung bietet eine zusätzliche Stütze zu den durch die Nuten des Läuferlamellenpakets verlaufenden Läuferstäben. Hierdurch wird die Festigkeit des Kurzschlussrings gegenüber Fliehkräften erhöht. Insbesondere können im Stirnbereich mehrere Befestigungselemente vorgesehen sein. Dabei ist eine Kombination von Ausnehmungen und Laschen möglich.

Vorteilhafterweise kann das Befestigungselement so ausgeführt sein, dass es eine möglichst geringe Fläche in Projektion auf die Umfangsrichtung aufweist. Dies kann vorteilhaft sein, da der Strom beispielsweise in Umfangsrichtung fließen kann. Je weniger Fläche das Befestigungselement in Umfangsrichtung einnimmt, desto mehr elektrisch gut leitfähiges Material des Kurzschlussrings kann in Umfangsrichtung vorgesehen sein. Hierdurch kann der elektrische Widerstand in Umfangsrichtung reduziert werden, so dass eine magnetische Induktion im Kurzschlussring möglichst ungehindert stattfinden kann.

Gemäß einem Ausführungsbeispiel der Erfindung weist der Käfigläufer ferner eine Läuferwelle und ein Läuferlamellenpaket auf. Das Läuferlamellenpaket weist mindestens eine Läufernut auf, in die ein Läuferstab eingegossen ist. Das Befestigungselement weist dabei in einer Ebene des Stirnbereichs senkrecht zur Läuferwelle einen kleineren Abstand zur Läuferwelle als die Läufernut auf.

Die Läuferwelle kann auch als Rotorwelle bezeichnet werden. Das Läuferlamellenpaket kann auch als Läuferblechpaket bezeichnet werden. Dabei weist dieses eine Vielzahl von Lamellen bzw. Blechen, beispielsweise aus Stahl oder Eisen, auf. In den Lamellen ist mindestens eine Läufernut vorgesehen, die beispielsweise parallel oder schräg zur Läuferwelle verläuft. Der Läuferstab, der in die Läufernut eingegossen wird, kann beispielsweise Aluminium oder Kupfer aufweisen. Dabei kann der Läuferstab zusammen mit dem Kurzschlussring gegossen werden und aus dem gleichen Material wie der Kurzschlussring bestehen.

Das Befestigungselement liegt dabei radial innen in Bezug auf die Läufernut. Auf diese Weise wird die Einspannung des Kurzschlussrings am Nutaustritt mechanisch entlastet. Je weiter das Befestigungselement von der Läufernut entfernt ist, desto besser kann das Material des Kurzschlussrings mechanisch entlastet werden. Je näher das Befestigungselement an der Läuferwelle angeordnet ist, desto besser können somit die auf den Kurzschlussring wirkenden Kräfte verteilt werden.

Gemäß einem weiteren Ausführungsbeispiel der Erfindung ist das Befestigungselement an mindestens einer Lamelle des Läuferlamellenpakets und/oder an der Läuferwelle vorgesehen.

Ist das Befestigungselement beispielsweise als Lasche oder Haken ausgeführt, so kann dieses an einer oder an mehreren Endlamellen des Läuferlamellenpakets vorgesehen sein. Bei Ausgestaltung des Befestigungselements als Ausnehmung mit Hinterschnitt kann sich die Ausnehmung über mehrere benachbarte Lamellen im Stirnbereich des Käfigläufers erstrecken.

Hierbei kann eine Endlamelle ein anderes Material als die übrigen Lamellen des Läuferlamellenpakets aufweisen. Ferner kann die Endlamelle eine andere Abmessung, insbesondere eine andere Dicke, als die übrigen Lamellen des Lamellenläuferpakets aufweisen. Beispielsweise können die Lamellen des Läuferlamellenpakets eine Dicke von 0,3 mm aufweisen und aus Eisen bestehen. Die Endlamelle bzw. die Endlamellen können dagegen aus einem Elektrostahl bestehen und eine Dicke zwischen 0,3 bis zu 2 mm aufweisen.

Ist das Befestigungselement an der Läuferwelle vorgesehen, so kann dieses beispielsweise als Nut ausgeführt sein, welche in axialer Richtung an der Läuferwelle verläuft. Alternativ können radiale Ausnehmungen, wie zum Beispiel schwalbenschwanzförmige Ausnehmungen, in radialer Richtung der Läuferwelle in einem Stirnbereich des Käfigläufers vorgesehen sein.

Gemäß einem weiteren Ausführungsbeispiel der Erfindung ist das Befestigungselement als Lasche ausgeführt. Eine Lasche kann dabei beispielsweise eine Erhebung bzw. ein Vorsprung sein. Die Lasche ist dabei zumindest in einem Teilbereich mit einer Endlamelle des Läuferlamellenpakets stoffschlüssig verbunden. Insbesondere kann die Lasche aus der Endlamelle ausgestanzt und anschließend in Form gebogen werden.

Gemäß einem weiteren Ausführungsbeispiel der Erfindung ragt die Lasche über den Kurzschlussring hinaus. Anders ausgedrückt verschwindet die Lasche nach dem Gießprozess nicht vollständig im Kurzschlussring, sondern ragt aus diesem heraus. Insbesondere kann die Lasche in den Luftraum im Stirnbereich des Käfigläufers ragen und dadurch einen optimalen Wärmeabtransport an die den Käfigläufer umgebende Luft aus dem Kurzschlussring gewährleisten. Insbesondere kann die Lasche bzw. mehrere Laschen als Lüfterschaufel bei Betrieb des Käfigläufers wirken.

Gemäß einem weiteren Ausführungsbeispiel der Erfindung ist die Lasche einfach oder mehrfach gebogen. Bei einfacher Biegung kann die Lasche beispielsweise einen Knick in radialer oder axialer Richtung des Käfigläufers aufweisen. Eine einfach gebogene Lasche kann einfach in der Herstellung sein. Eine mehrfach gebogene Lasche kann dabei beispielsweise mehrere Knicks aufweisen. Damit kann eine mehrfach gebogene Lasche eine komplexe dreidimensionale Struktur aufweisen und einen sicheren Formschluss zwischen dem Stirnbereich des Käfigläufers und dem Kurzschlussring gewährleisten.

Gemäß einem weiteren Ausführungsbeispiel der Erfindung ist das Befestigungselement als Ausnehmung mit einem Hinterschnitt ausgeführt. Die Ausnehmung kann dabei beispielsweise in einer Endlamelle vorgesehen sein oder durch mehrere Endlamellen verlaufen. Die Ausnehmung kann beispielsweise ein Loch bzw. eine Nut sein. Die Ausgestaltung der Ausnehmung mit Hinterschnitt kann dabei bedeuten, dass der Querschnitt der Ausnehmung in axialer Richtung vom Stirnbereich weg größer wird. Beispielsweise kann die Ausnehmung mit einem Schwalbenschwanzhinterschnitt ausgeführt sein. Beim Gießen der Läuferstäbe und des Kurzschlussrings füllt sich der Hohlraum der Ausnehmung, so dass eine formschlüssige Verbindung zwischen dem Stirnbereich des Käfigläufers und dem Kurzschlussring entsteht.

Gemäß einem weiteren Ausführungsbeispiel der Erfindung ist die Läufernut in einem radial innenliegenden Bereich des Stirnbereichs in axialer Richtung abgerundet ausgeführt. Der radial innenliegende Bereich kann dabei derjenige Bereich der der Läufernut sein, der zum Beispiel der Läuferwelle am nächsten ist. Die Abrundung der Läufernut zur Läuferwelle hin kann dazu beitragen, Spannungsspitzen an dieser Stelle zu reduzieren.

Gemäß einem weiteren Ausführungsbeispiel der Erfindung verläuft die Ausnehmung parallel zur Läuferwelle. Ferner ist die Ausnehmung direkt angrenzend an die Läuferwelle vorgesehen. Auf diese Weise kann zum Beispiel eine bereits vorgesehene Nut, wie zum Beispiel eine Schweißnut, zur Abstützung des Kurzschlussringes genutzt werden, indem diese teilweise mit dem Material des Kurzschlussringes ausgegossen wird.

Gemäß einem zweiten Aspekt der Erfindung wird ein Verfahren zum Herstellen eines oben beschriebenen Käfigläufers für eine Elektromaschine mit gegossenem Kurzschlussring vorgestellt. Das Verfahren weist die folgenden Schritte auf: Vorsehen eines Läuferlamellenpakets mit einem Stirnbereich; Gießen eines Kurzschlussrings im Stirnbereich; Vorsehen eines Befestigungselements im Stirnbereich, welches einen Formschluss zwischen dem Stirnbereich und dem Kurzschlussring ermöglicht.

Gemäß einem weiteren Ausführungsbeispiel der Erfindung weist das Verfahren ferner Stanzen des Befestigungselements in mindestens eine Endlamelle des Läuferlamellenpakets auf. Gemäß einem weiteren Ausführungsbeispiel der Erfindung weist das Verfahren ferner Biegen des Befestigungselements auf.

Die einzelnen Schritte des Verfahrens können in unterschiedlicher Reihenfolge ausgeführt werden. Beispielsweise kann das Biegen des Befestigungselements zum Beispiel vor oder nach dem Fügen des Läuferlamellenpakets stattfinden. Insbesondere kann ein Läuferlamellenpaket zusammengefügt und bereitgestellt werden. Ferner kann anschließend eine Endlamelle des Läuferlamellenpakets gestanzt werden. Anschließend kann das Befestigungselement, wenn dieses als Lasche ausgeführt ist, in Form gebogen werden. Schließlich kann der Kurzschlussring im Stirnbereich des Läuferlamellenpakets bzw. des Käfigläufers gegossen werden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.
- Fig. 1A: zeigt eine Draufsicht auf einen Ausschnitt eines Stirnbereichs eines Käfigläufers vor dem Gießen des Kurzschlussrings gemäß einem ersten Ausführungsbeispiel der Erfindung
- Fig. 1B: zeigt einen Querschnitt durch den in Fig. 1A gezeigten Käfigläufer mit gegossenem Kurzschlussring
- Fig. 2A: zeigt eine Draufsicht auf einen Ausschnitt eines Stirnbereichs eines Käfigläufers vor dem Gießen des Kurzschlussrings gemäß einem zweiten Ausführungsbeispiel der Erfindung
- Fig. 2B: zeigt einen Querschnitt durch den in Fig. 2A gezeigten Käfigläufer mit gegossenem Kurzschlussring
- Fig. 3A: zeigt eine Draufsicht auf einen Ausschnitt eines Stirnbereichs eines Käfigläufers vor dem Gießen des Kurzschlussrings gemäß einem dritten Ausführungsbeispiel der Erfindung
- Fig. 3B: zeigt einen Querschnitt durch den in Fig. 3A gezeigten Käfigläufer mit gegossenem Kurzschlussring
- Fig. 4A: zeigt eine Draufsicht auf einen Ausschnitt eines Stirnbereichs eines Käfigläufers vor dem Gießen des Kurzschlussrings gemäß einem vierten Ausführungsbeispiel der Erfindung
- Fig. 4B: zeigt einen Querschnitt durch den in Fig. 4A gezeigten Käfigläufer mit gegossenem Kurzschlussring
- Fig. 5A: zeigt eine Draufsicht auf einen Ausschnitt eines Stirnbereichs eines Käfigläufers vor dem Gießen des Kurzschlussrings gemäß einem fünften Ausführungsbeispiel der Erfindung
- Fig. 5B: zeigt einen Querschnitt durch den in Fig. 5A gezeigten Käfigläufer mit gegossenem Kurzschlussring
- Fig. 5C: zeigt die in Fig. 5A gezeigte Ansicht nach einem Biege- und Gießschritt
- Fig. 6A: zeigt einen Querschnitt durch einen Käfigläufer mit Kurzschlussring gemäß einem sechsten Ausführungsbeispiel der Erfindung
- Fig. 6B: zeigt den in Fig. 6A dargestellten Querschnitt mit zusätzlicher Abrundung der Läufernut an der Endlamelle
- Fig. 7A: zeigt eine Draufsicht auf einen Ausschnitt eines Stirnbereichs eines Käfigläufers vor dem Gießen des Kurzschlussrings gemäß einem siebten Ausführungsbeispiel der Erfindung
- Fig. 7B: zeigt einen Querschnitt entlang der Linie A-A durch eine in Fig. 7A gezeigte Endlamelle
- Fig. 8A: zeigt eine Draufsicht auf einen Ausschnitt eines Stirnbereichs eines Käfigläufers vor dem Gießen des Kurzschlussrings gemäß einem achten Ausführungsbeispiel der Erfindung
- Fig. 8B: zeigt einen Querschnitt entlang der Linie A-A durch eine in Fig. 8A gezeigte Endlamelle
- Fig. 9: zeigt einen Querschnitt durch einen Käfigläufer mit Kurzschlussring gemäß einem neunten Ausführungsbeispiel der Erfindung
- Fig. 10A: zeigt einen Querschnitt durch einen Käfigläufer mit Kurzschlussring gemäß einem zehnten Ausführungsbeispiel der Erfindung
- Fig. 10B: zeigt einen Querschnitt durch die Läuferwelle des Käfigläufers aus Fig. 10A
- Fig. 10C: zeigt einen Querschnitt einer alternativen Läuferwelle des Käfigläufers aus Fig. 10A

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

In den einzelnen Figuren sind unterschiedliche Ausführungsbeispiele von Käfigläufern 1 dargestellt, die eine erhöhte Belastbarkeit eines Kurzschlussringes 11 gegen Fliehkrafteinwirkungen aufweisen und damit höhere Drehzahlen zulassen. Dies wird durch eine zusätzliche formschlüssige Verbindung des gegossenen Kurzschlussringes 11 mit einem Stirnbereich 9 des Käfigläufers 1 ermöglicht.

Wie in den unterschiedlichen Figuren gezeigt, weist der Käfigläufer 1 eine Läuferwelle 3 auf, an der ein Läuferlamellenpaket 5 angeordnet ist. Das Läuferlamellenpaket 5 weist einen Stirnbereich 9 auf, in dem eine oder mehrere Endlamellen 7 angeordnet sind. Die Endlamellen 7 können beispielsweise eine größere Breite und ein anderes Material als die übrigen Lamellen des Läuferlamellenpakets 5 aufweisen. In dem Läuferlamellenpaket 5 ist eine Läufernut 13 vorgesehen, in die ein Läuferstab 15 beispielsweise aus Kupfer oder aus Aluminium eingegossen wird. Zusammen mit dem Läuferstab 15 wird im Stirnbereich 9 ein Kurzschlussring 11 aus Kupfer oder Aluminium gegossen.

Bei der Ausgestaltung des Käfigläufers 1 wird ein möglichst großer Kurzschlussring 11 und ein Käfigwerkstoff mit möglichst großer elektrischer Leitfähigkeit gewünscht, um die Stromwärmeverluste im Rotorkäfig zu vermindern. Das führt wegen der geringen Festigkeit der entsprechenden Werkstoffe und der großen Masse der Kurzschlussringe 11 zu einer begrenzten Drehzahl bzw. Fliehkraftfestigkeit. Bei bekannten Käfigläufern muss daher ein Kompromiss aus Stromwärmeverlusten und einer zulässigen Drehzahl gefunden werden.

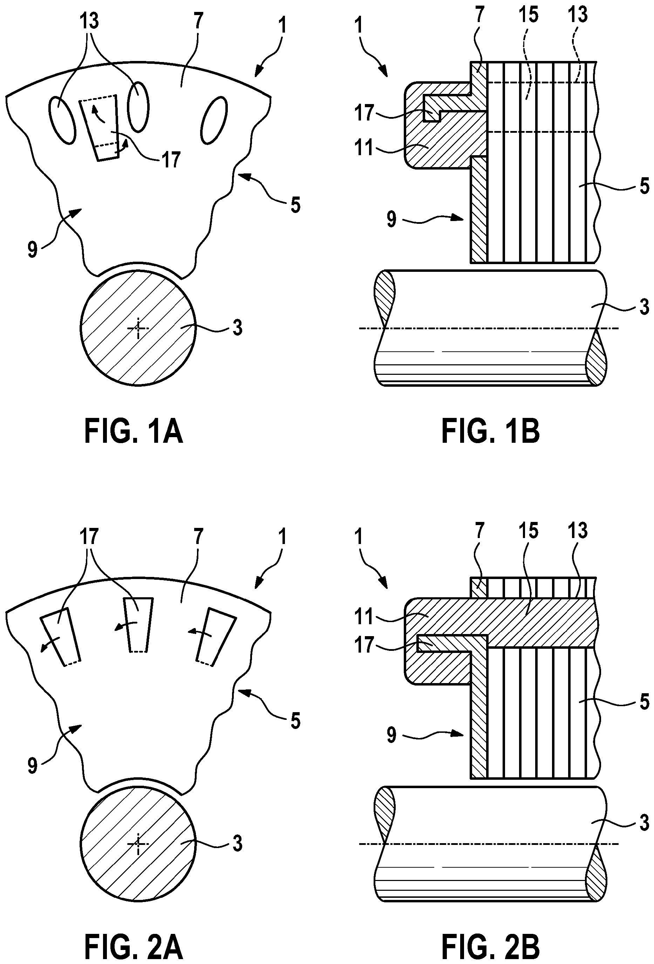

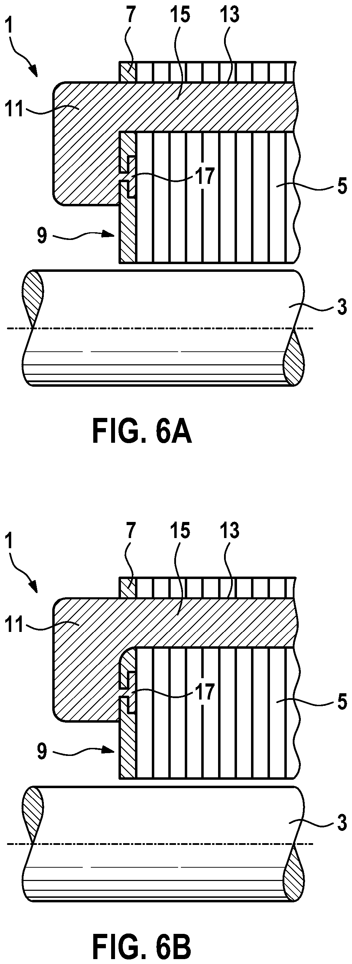

Gemäß der Erfindung wird eine Steigerung der zulässigen Drehzahl bei zumindest gleichbleibenden oder verringerten Stromwärmeverlusten dadurch ermöglicht, dass im Stirnbereich 9 zum Beispiel an einer Endlamelle 7 eine zusätzliche formschlüssige Verbindung zwischen dem Läuferlamellenpaket 5 und dem Kurzschlussring 11 vorgesehen wird. Die formschlüssige Verbindung wird durch ein Befestigungselement 17 ermöglicht. Dieses kann beispielsweise, wie in den Fig. 1A bis 5C gezeigt, als Lasche bzw. Vorsprung ausgeführt sein. Alternativ kann das Befestigungselement 17, wie in den Fig. 6A bis 10C gezeigt, als eine Ausnehmung mit Hinterschnitt ausgeführt sein.

Die Befestigungselemente 17 sind dabei wie in den Figuren gezeigt in einem im Vergleich zur Läufernut 13 bzw. zum Läuferstab 15 radial innenliegenden Bereich des Stirnbereichs 9 vorgesehen.

Wie in den Fig. 1A bis 5C angedeutet, kann die Lasche zum Beispiel durch Stanzen in eine Endlamelle 7 eingebracht werden und diese vor oder nach dem Fügen des Läuferlamellenpakets 5, jedoch vor dem Gießen des Läuferstabs 15 und des Kurzschlussrings 11 in die gewünschte Form gebogen werden. Die Biegestellen der ausgestanzten Befestigungselemente 17 sind in den Fig. 1A bis 5A gestrichelt dargestellt. Die Biegerichtung ist mit Pfeilen angedeutet. Durchgezogene Linien deuten die nicht gestanzten Bereiche der Befestigungselemente 17 an. Nach dem Gießen des elektrisch gut leitfähigen Materials, wie Kupfer oder Aluminium, entsteht eine zusätzliche Verbindung des Kurzschlussringes 11 mit dem Stirnbereich 9 und insbesondere mit der Endlamelle 7. Hierdurch wird die mechanische Festigkeit des Käfigläufers 1 gegenüber Fliehkräften erhöht.

Wie in Fig. 1A und 1B gezeigt, können die Befestigungselemente 17 zwischen Läufernuten 13 angeordnet sein. Ferner sind die in Fig. 1 dargestellten Befestigungselemente 17 an zwei Stellen geknickt bzw. gebogen.

Wie in Fig. 2A und 2B gezeigt, können die Befestigungselemente 17 in die Endlamelle 7 direkt gegenüber den Läufernuten 13 gestanzt sein, so dass die Läuferstäbe 15 direkt über die Stanzöffnungen der Befestigungselemente 17 in das Läuferlamellenpaket 5 gegossen werden können.

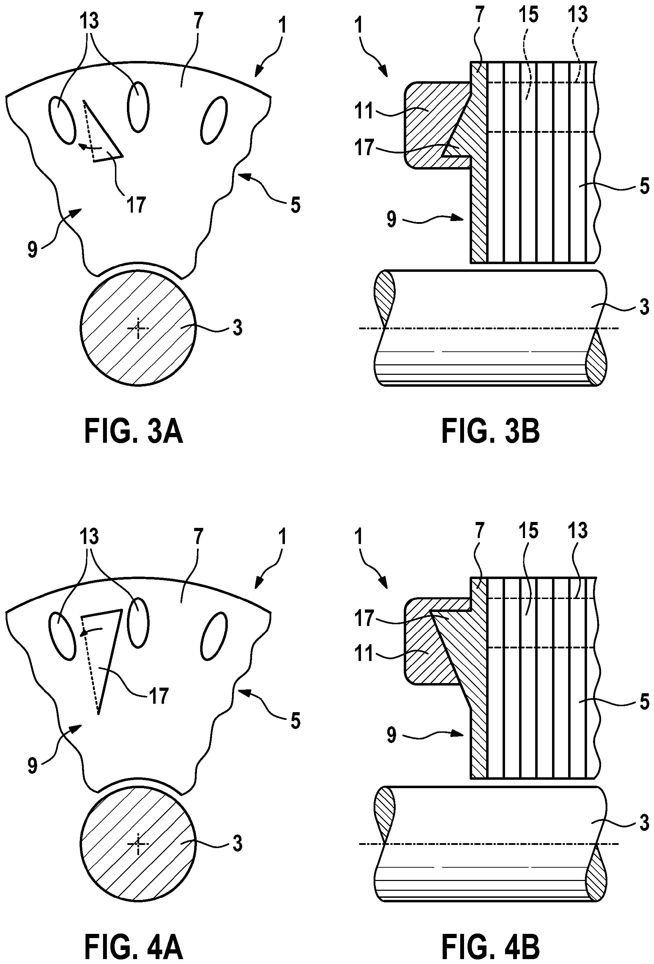

Die in Fig. 3A bis 4B gezeigten Befestigungselemente 17 des Käfigläufers 1 weisen eine variierende Ausdehnung in axialer Richtung auf. In Fig. 3 nimmt die Ausdehnung des Befestigungselements 17, welches als Lasche ausgeführt ist, nach radial außen ab, während sie im Ausführungsbeispiel in Fig. 4 nach radial außen zunimmt. In den Querschnittsdarstellungen der Fig. 3B und 4B sieht das Befestigungselement 17 in diesen Ausführungsbeispielen dreieckig aus. Ferner kann durch die Ausgestaltung des Befestigungselements 17, wie in Fig. 4 gezeigt, ein Wärmetransport an die den Käfigläufer 1 umgebende Luft erhöht werden. Dies wird dadurch ermöglicht, dass die Lasche nicht vollständig im Kurzschlussring 11 verschwindet, sondern aus diesem herausragt. Auf diese Weise wird ein sehr guter Wärmeabtransport aus dem Kurzschlussring 11 gewährleistet.

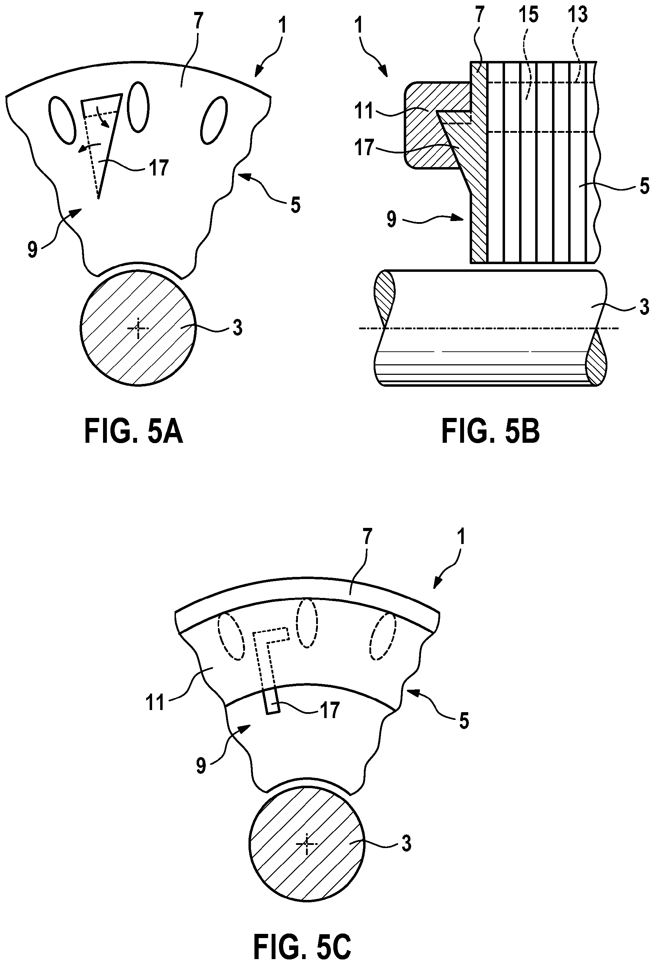

In Fig. 5A und 5B ist eine Kombination aus den Biegeelementen 17 der Fig. 1 bis 4 dargestellt. Dabei ist das Befestigungselement 17 in Fig. 5 im Querschnitt dreieckförmig ausgeführt und weist zwei Biegestellen auf.

In den Fig. 6A bis 10C sind Käfigläufer 1 mit Befestigungselementen 17 dargestellt, die als Ausnehmungen mit Hinterschnitt ausgeführt sind.

Wie in den Ausführungsbeispielen von Fig. 6A bis Fig. 8B gezeigt, ist die Ausnehmung als Nut oder Loch in einer Endlamelle 7 vorgesehen. Die Endlamelle 7 ist in diesen Ausführungsbeispielen mit einer größeren Dicke ausgeführt ist als die übrigen Lamellen des Läuferlamellenpakets 5. Die Befestigungselemente 17 sind dabei so ausgeführt, dass der Querschnitt in axialer Richtung von der Endlamelle 7 weg größer wird. Durch Gießen des Kurzschlussrings 11 wird der Hohlraum der Ausnehmung gefüllt und es entsteht eine formschlüssige Abstützung des Kurzschlussrings 11 an einer radial innenliegenden Stelle des Käfigläufers 1. Ferner wird hierdurch die Einspannung am Nutaustritt der Läufernut 13 mechanisch entlastet. Die Entlastung kann ferner dadurch optimiert werden, dass die Läufernut 13 wie in Fig. 6B gezeigt in einem radial innenliegenden Bereich in axialer Richtung abgerundet ist. Das Befestigungselement 17 kann sich dabei, wie in Fig. 6A und 6B gezeigt, zum Beispiel in Umlaufrichtung erstrecken.

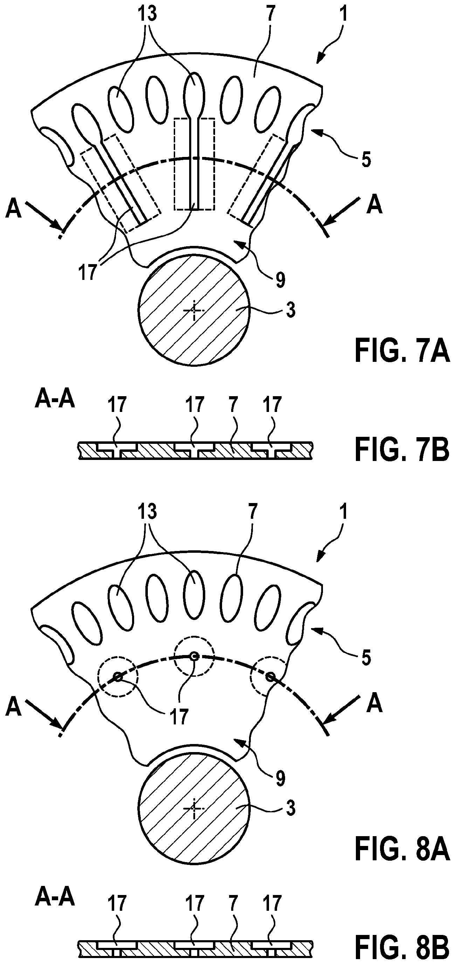

Alternativ kann sich die Ausnehmung, wie in Fig. 7A und 7B gezeigt, in radialer Richtung einer Endlamelle 7 erstrecken. Dabei ist ein Hinterschnitt, der hinter der Bildebene von Fig. 7 liegt, gestrichelt dargestellt. Die Ausdehnung des Befestigungselements 17 in radialer Richtung kann variabel sein. Beispielsweise kann, wie in Fig. 7A gezeigt, eine Verbindung der Ausnehmung zur Läufernut 13 bestehen. Alternativ kann die Ausnehmung separat von der Läufernut 13 ausgeführt sein. Wie in Fig. 8A und 8B gezeigt, kann die Ausnehmung rund ausgeführt sein.

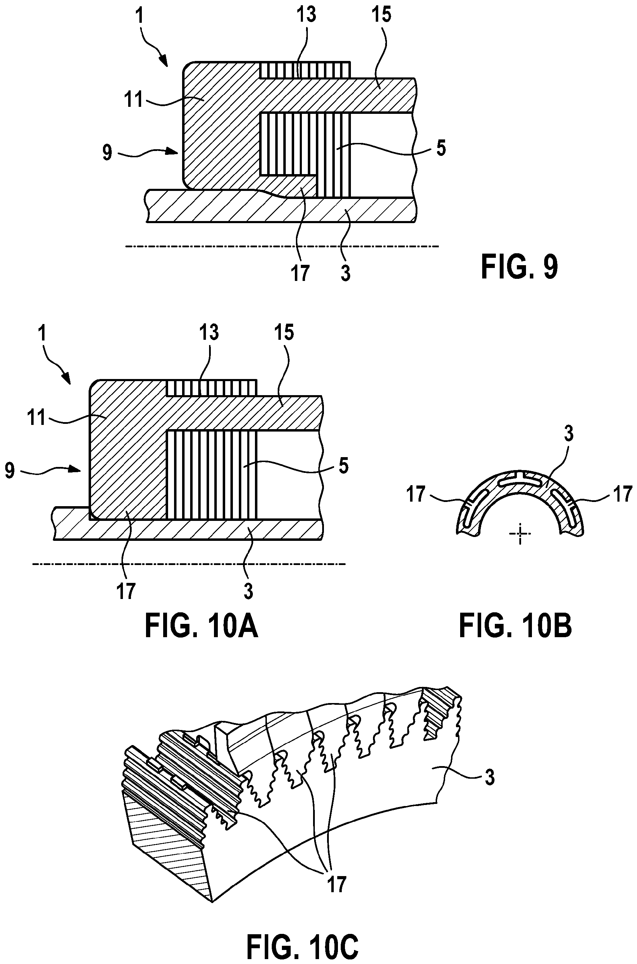

In den Ausführungsbeispielen in Fig. 9 und 10 sind alle Lamellen des Läuferlamellenpakets 5 mit gleicher Breite bzw. Dicke ausgeführt. Der Stirnbereich 9 verläuft dabei durch mehrere Lamellen. Im Ausführungsbeispiel in Fig. 9 verläuft das als Ausnehmung ausgeführte Befestigungselement 17 als eine Nut am radial inneren Bereich der Lamellen. Dabei ist ferner ein Hinterschnitt mit der Läuferwelle 3 vorgesehen.

Im Ausführungsbeispiel von Fig. 10 ist das Befestigungselement 17 als Nut in der Läuferwelle 3 ausgeführt. Nach Eingießen des elektrisch leitfähigen Materials des Kurzschlussrings 11 entsteht dabei eine sogenannte Schwalbenschwanzverbindung zwischen der Läuferwelle 3 und dem Kurzschlussring 11.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

## Patentansprüche

1. Käfigläufer (1) für eine Elektromaschine mit gegossenem Kurzschlussring (11), der Käfigläufer (1) aufweisend einen Stirnbereich (9), einen gegossenen Kurzschlussring (11), der im Stirnbereich (9) angeordnet ist, wobei im Stirnbereich (9) zumindest ein Befestigungselement (17) vorgesehen ist, das einen Formschluss zwischen dem Stirnbereich (9) und dem Kurzschlussring (11) herstellt, **dadurch gekennzeichnet, dass**
- das zumindest eine Befestigungselement (17) als Lasche ausgeführt ist, wobei die Lasche einfach oder mehrfach gebogen ist, oder dass
- das zumindest eine Befestigungselement (17) als Ausnehmung mit Hinterschnitt ausgeführt ist.

2. Käfigläufer (1) gemäß Anspruch 1, ferner aufweisend
eine Läuferwelle (3); und
ein Läuferlamellenpaket (5);
wobei das Läuferlamellenpacket (5) eine Läufernut (13) aufweist, in die ein Läuferstab (15) eingegossen ist;
wobei das Befestigungselement (17) in einer Ebene des Stirnbereichs (9) senkrecht zur Läuferwelle (3) einen kleineren Abstand zur Läuferwelle (3) als die Läufernut (13) aufweist.

3. Käfigläufer (1) gemäß Anspruch 2,
wobei das Befestigungselement (17) an einer Lamelle des Läuferlamellenpakets (5) und/oder an der Läuferwelle (3) vorgesehen ist.

4. Käfigläufer (1) gemäß Anspruch 1,
wobei die Lasche über den Kurzschlussring (11) hinausragt.

5. Käfigläufer (1) gemäß Anspruch 2,
wobei die Läufernut (13) in einem radial innen liegenden Bereich des Stirnbereichs (9) in axialer Richtung abgerundet ausgeführt ist.

6. Verfahren zum Herstellen eines Käfigläufers (1) für eine Elektromaschine mit gegossenem Kurzschlussring (11) gemäß einem der Ansprüche 1 bis 5, das Verfahren aufweisend die folgenden Schritte
Bereitstellen eines Läuferlamellenpakets (5) mit einem Stirnbereich (9); Gießen eines Kurzschlussrings (11) im Stirnbereich (9);
das Verfahren **gekennzeichnet dadurch, dass** es ferner aufweist, vor dem Gießen:
- Vorsehen eines Befestigungselements (17) im Stirnbereich (9), das einen Formschluss zwischen dem Stirnbereich (9) und dem Kurzschlussring (11) ermöglicht,
- Stanzen des Befestigungselements (17) in eine Endlamelle (7) des Läuferlamellenpakets (5),
- Biegen des Befestigungselements (17).

## Claims

1. Squirrel-cage rotor (1) for an electrical machine having a cast short-circuiting ring (11), the squirrel-cage rotor (1) having an end region (9), a cast short-circuiting ring (11) which is arranged in the end region (9), wherein at least one fastening element (17) which establishes an interlocking connection between the end region (9) and the short-circuiting ring (11) is provided in the end region (9), **characterized in that**
- the at least one fastening element (17) is designed as a tab, wherein the tab is bent once or several times, or **in that**
- the at least one fastening element (17) is designed as a recess with an undercut.

2. Squirrel-cage rotor (1) according to Claim 1, further having
a rotor shaft (3); and
a rotor laminate stack (5);
wherein the rotor laminate stack (5) has a rotor slot (13) into which a rotor bar (15) is cast;
wherein the fastening element (17) is at a smaller distance from the rotor shaft (3) than the rotor slot (13) in a plane of the end region (9) perpendicular to the rotor shaft (3).

3. Squirrel-cage rotor (1) according to Claim 2,
wherein the fastening element (17) is provided on a laminate of the rotor laminate stack (5) and/or on the rotor shaft (3).

4. Squirrel-cage rotor (1) according to Claim 1, wherein the tab protrudes beyond the short-circuiting ring (11).

5. Squirrel-cage rotor (1) according to Claim 2, wherein the rotor slot (13) is designed in a rounded manner in an axial direction in a radially inner region of the end region (9).

6. Method for producing a squirrel-cage rotor (1) for an electrical machine having a cast short-circuiting ring (11) according to one of Claims 1 to 5, which method comprises the following steps
providing a rotor laminate stack (5) having an end region (9);
casting a short-circuiting ring (11) in the end region (9) ;
the method being **characterized in that** it further comprises, before the casting process:
- providing a fastening element (17) in the end region (9), which fastening element allows an interlocking connection between the end region (9) and the short-circuiting ring (11),
- stamping the fastening element (17) into an end laminate (7) of the rotor laminate stack (5),
- bending the fastening element (17).

## Revendications

1. Rotor à cage d'écureuil (1) pour une machine électrique comprenant une bague de court-circuit (11) moulée, le rotor à cage d'écureuil (1) possédant une zone frontale (9), une bague de court-circuit (11) moulée qui est disposée dans la zone frontale (9), au moins un élément de fixation (17) se trouvant dans la zone frontale (9), lequel établit une liaison par complémentarité de formes entre la zone frontale (9) et la bague de court-circuit (11), **caractérisé en ce que**
- l'au moins un élément de fixation (17) est réalisé sous la forme d'une languette, la languette étant cintrée une fois ou plusieurs fois, ou **en ce que**
- l'au moins un élément de fixation (17) est réalisé sous la forme d'un creux avec contre-dépouille.

2. Rotor à cage d'écureuil (1) selon la revendication 1, possédant en outre
un arbre de rotor (3) ; et
un paquet de lamelles de rotor (5) ;
le paquet de lamelles de rotor (5) possédant une rainure de rotor (13) dans laquelle est moulée une tige de rotor (15) ;
l'élément de fixation (17), dans un plan de la zone frontale (9) perpendiculaire à l'arbre de rotor (3), présentant un écart plus petit par rapport à l'arbre de rotor (3) que la rainure de rotor (13).

3. Rotor à cage d'écureuil (1) selon la revendication 2, l'élément de fixation (17) se trouvant sur une lamelle du paquet de lamelles de rotor (5) et/ou sur l'arbre de rotor (3).

4. Rotor à cage d'écureuil (1) selon la revendication 1, la languette faisant saillie au-dessus de la bague de court-circuit (11).

5. Rotor à cage d'écureuil (1) selon la revendication 2, la rainure de rotor (13) étant réalisée arrondie dans le sens axial dans une zone de la zone frontale (9) située radialement à l'intérieur.

6. Procédé de fabrication d'un rotor à cage d'écureuil (1) pour une machine électrique comprenant une bague de court-circuit (11) moulée selon l'une des revendications 1 à 5, le procédé comprenant les étapes suivantes :
fourniture d'un paquet de lamelles de rotor (5) pourvu d'une zone frontale (9) ;
moulage d'une bague de court-circuit (11) dans la zone frontale (9) ;
le procédé étant **caractérisé en ce qu'**il comprend en outre, avant le moulage :
- mise en place d'un élément de fixation (17) dans la zone frontale (9), lequel permet une liaison par complémentarité de formes entre la zone frontale (9) et la bague de court-circuit (11),
- estampage de l'élément de fixation (17) en une lamelle d'extrémité (7) du paquet de lamelles du rotor (5),
- cintrage de l'élément de fixation (17).
